# EUROPEAN PATENT APPLICATION

(11) **EP 4 583 289 A1**
(43) Date of publication of application: **09.07.2025**
(21) Application number: 23859929.4
(22) Date of filing: 28.07.2023
(51) Int. Cl.: H01M 50/342, H01M 50/256

(54) **BATTERY PACK**

(30) Priority: 31.08.2022 JP 2022137492
(71) Applicant: Panasonic Energy Co., Ltd., Osaka 570-8511 (JP)
(72) Inventor: KAWAKAMI, Satoshi, Kadoma-shi, Osaka 571-0057 (JP)
(74) Representative: Novagraaf International SA
(86) International application number: PCT/JP2023/027786
(87) International publication number: WO 2024/048160

(57) **Abstract**

A battery pack is provided which is capable of exhausting high-pressure gas from a desired position of a case. Battery pack 100 includes: one or more secondary battery cells 1 each of which includes an outer covering can with a safety valve; outer covering case 10 that houses one or more secondary battery cells 1 and includes a portion in which exhaust hole 13 is provided for exhausting the high-pressure gas to outside when the safety valve of one of the one or more secondary battery cells 1 is opened to exhaust the high-pressure gas; and label 20 that is adhered to a peripheral edge of exhaust hole 13 of outer covering case 10 to close exhaust hole 13. Label 20 includes an adhesive surface that is adhered to outer covering case 10, and the adhesive surface includes a portion in which rupture origin part 22 is provided.

## Description

### TECHNICAL FIELD

The present disclosure relates to a battery pack.

### BACKGROUND ART

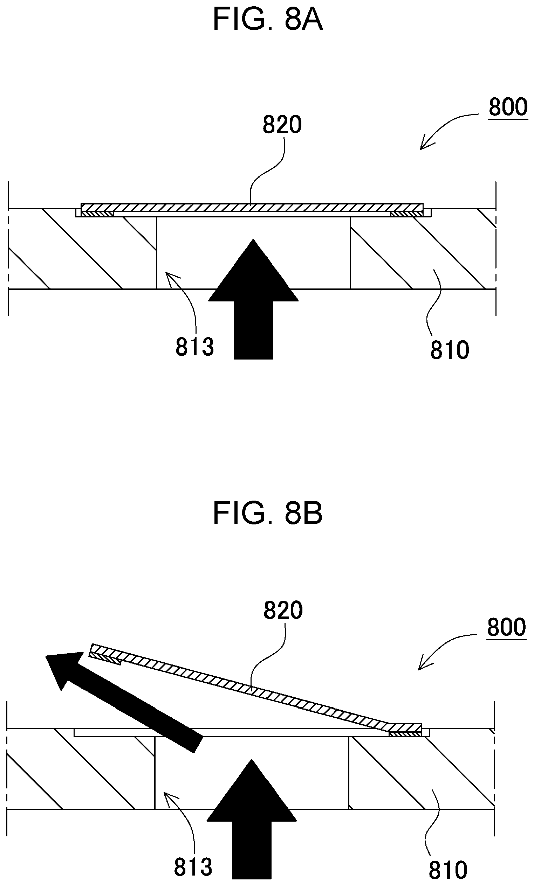

In order to drive an electrical device by using rechargeable secondary batteries, such as lithium-ion secondary batteries, a battery pack that includes a case, in which secondary battery cells are housed, is used (for example, Patent Literature (PTL) 1). In such a battery pack, when some kind of abnormality occurs in a secondary battery cell, high-pressure gas from the secondary battery cell accumulates inside the battery pack. In order to exhaust the gas to the outside the case when such an event occurs, an exhaust hole may be provided in a portion of the case. Since the exhaust hole is not normally used, the exhaust hole may be closed with a label to prevent foreign objects or the like from entering the case through the exhaust hole. With this configuration, when the internal pressure of case 810 increases as illustrated in FIG. 8A, the pressure ruptures label 820 as illustrated in FIG. 8B, allowing the high-pressure gas to be exhausted to the outside case 810 through the exhaust hole.

However, in this configuration, the high-pressure gas is exhausted outside the case from the portion where the label is ruptured, and it is difficult to predict in advance which part of the label will be ruptured, making it difficult to accurately control the exhaust position and direction of the high-pressure gas.

### Citation List

### Patent Literature

[PTL 1] International Publication No. WO2019/163550

### SUMMARY OF THE INVENTION

### TECHNICAL PROBLEM

An object of the present disclosure is to provide a battery pack that allows high-pressure gas to be exhausted from a desired position of the case.

### SOLUTION TO PROBLEM

A battery pack according to one aspect of the present invention includes: one or more secondary battery cells each of which includes an outer covering can with a safety valve; an outer covering case that houses the one or more secondary battery cells and includes a portion in which an exhaust hole is provided for exhausting high-pressure gas to outside the outer covering case when the safety valve of one of the one or more secondary battery cells is opened to exhaust the high-pressure gas; and a label that is adhered to a peripheral edge of the exhaust hole of the outer covering case to close the exhaust hole. The label includes an adhesive surface that is adhered to the outer covering case, and the adhesive surface includes a portion in which a rupture origin part is provided.

The battery pack according to one aspect of the present invention is configured such that, when high-pressure gas is discharged into the outer covering case from the safety valve, the rupture origin part of the label enables rupturing to start from the portion of the label in which the strength is intentionally decreased. As a result, it is possible to accurately control the exhaust position of the high-pressure gas, leading to an increased safety.

### BRIEF DESCRIPTION OF THE DRAWINGS

[FIG. 1] FIG. 1 is a perspective view of a battery pack according to Embodiment 1.
[FIG. 2] FIG. 2 is an exploded perspective view of a front face of the battery pack illustrated in FIG. 1.
[FIG. 3] FIG. 3 is an exploded perspective view of an inside of the battery pack illustrated in FIG. 1.
[FIG. 4] FIG. 4 is a cross-sectional perspective view taken along line IV-IV of FIG. 1.
[FIG. 5] FIG. 5 is an enlarged cross-sectional view of a main portion of FIG. 4.
[FIG. 6] FIG. 6 is an enlarged exploded perspective view of FIG. 2 viewed from obliquely downward.
[FIG. 7] FIG. 7 is an exploded perspective view of a label illustrated in FIG. 6.
[FIG. 8] FIG. 8A is a schematic cross-sectional view illustrating a state in which an internal pressure of a battery pack according to a comparative example increases, and FIG. 8B is a perspective view illustrating a state in which a label is peeled from the state in FIG. 8A and gas is exhausted.
[FIG. 9] FIG. 9A is a schematic cross-sectional view illustrating a state in which an internal pressure of the battery pack according to Embodiment 1 increases, and FIG. 9B is a perspective view illustrating a state in which a slit portion is ruptured from the state in FIG. 9A and gas is exhausted.
[FIG. 10] FIG. 10 is an exploded perspective view of a label of a battery pack according to a variation viewed from obliquely downward.
[FIG. 11] FIG. 11A is a plan view of a double-sided tape of the label of the battery pack according to Embodiment 1 viewed from front, FIG. 11B is a schematic view illustrating a result of CAE performed on FIG. 11A, and FIG. 11C is a plan view of the label with a slit portion provided on the double-sided tape in FIG. 11A.
[FIG. 12] FIG. 12A is a plan view of a double-sided tape of a label of a battery pack according to Embodiment 2 viewed from front, FIG. 12B is a schematic view illustrating a result of CAE performed on FIG. 12A, and FIG. 12C is a plan view of the label with slit portions provided on the double-sided tape in FIG. 12A.
[FIG. 13] FIG. 13A is a plan view of a double-sided tape of a label of a battery pack according to Embodiment 3 viewed from front, FIG. 13B is a schematic view illustrating a result of CAE performed on FIG. 13A, and FIG. 13C is a plan view of the label with a slit portion provided on the double-sided tape in FIG. 13A.
[FIG. 14] FIG. 14A is a plan view of a double-sided tape of a label of a battery pack according to Embodiment 4 viewed from front, FIG. 14B is a schematic view illustrating a result of CAE performed on FIG. 14A, and FIG. 14C is a plan view of the label with slit portions provided on the double-sided tape in FIG. 14A.
[FIG. 15] FIG. 15A is a plan view of a double-sided tape of a label of a battery pack according to Embodiment 5 viewed from front, FIG. 15B is a schematic view illustrating a result of CAE performed on FIG. 15A, and FIG. 15C is a plan view of the label with slit portions provided on the double-sided tape in FIG. 15A.

### DESCRIPTION OF EMBODIMENTS

Aspects of the present invention may be specified by the following configuration and features.

The battery pack according to another aspect of the present invention further includes, in the aspect above: a double-sided tape for adhering the label to the outer covering case to fix the label at a position at which the exhaust hole is closed. The rupture origin part is included in a region of the label to which the double-sided tape is attached. The above configuration makes it possible to seal the exhaust hole with the double-sided tape to facilitate waterproofing and airtightness, while maintaining waterproofness and airtightness by providing the rupture origin part in the region to which the double-sided tape is attached.

Moreover, in the battery pack according to another aspect of the present invention, in any of the aspects above, the double-sided tape includes a tape-side rupture part at a position corresponding to the rupture origin part of the label.

Moreover, in the battery pack according to another aspect of the present invention, in any of the aspects above, the rupture origin part is slit-shaped.

Moreover, in the battery pack according to another aspect of the present invention, in any of the aspects above, the rupture origin part includes a plurality of rupture origin parts that are provided at a plurality of positions.

Moreover, the battery pack according to another aspect of the present invention, in any of the aspects above, further includes a label attachment region along the peripheral edge of the exhaust hole of the outer covering case. The label attachment region is a region to which the label is attached, and includes a portion in which a narrow portion with an adhesive width that is narrower than other portions of the label attachment region is provided. The narrow portion includes an irregular shaped portion that has an adhesive width from the peripheral edge of the exhaust hole different from other portions of the narrow portion. The rupture origin part is provided on the label, at a position adjacent to the irregular shaped portion.

Hereinafter, embodiments of the present invention will be described with reference to the drawings. Note that the following embodiments are examples for embodying the technical idea of the present invention, and are not intended to limit the present invention to the following description. Moreover, the present specification does not limit the members in the claims to members in the embodiments. In particular, dimensions, materials, shapes, relative arrangement and the like of structural elements described in the embodiments are not intended to restrict the scope of the present invention thereto, but are mere explanatory examples, unless particularly specifically described. It is to be noted that sizes, positional relations and the like of members illustrated in each drawing may be exaggerated for clarifying a description. Moreover, in the following description, the same name or symbol denotes the same member or members of the same quality, and a detailed description thereof will be omitted as appropriate. Moreover, each element constituting the present invention may have a mode where a plurality of elements are made up of the same member and the one member may serve as the plurality of elements, or conversely, a function of one member can be shared and realized by a plurality of members.

The battery pack according to the present invention can be used for power sources for driving electric carts for home delivery and golf courses, electric scooters, construction machinery, and vehicles such as hybrid vehicles and electric vehicles. The battery pack can also be used for power sources for driving assisted bicycles as well as power sources for portable electrical devices such as wireless devices, electric cleaners, and power tools. Alternatively, the battery pack can be used as backup power sources for servers in stationary energy storage applications, or as power supply devices for homes, businesses, and factories. Hereinafter, a battery pack used as a power source for driving an electric cart will be described as an embodiment of the present invention.

### [Embodiment 1]

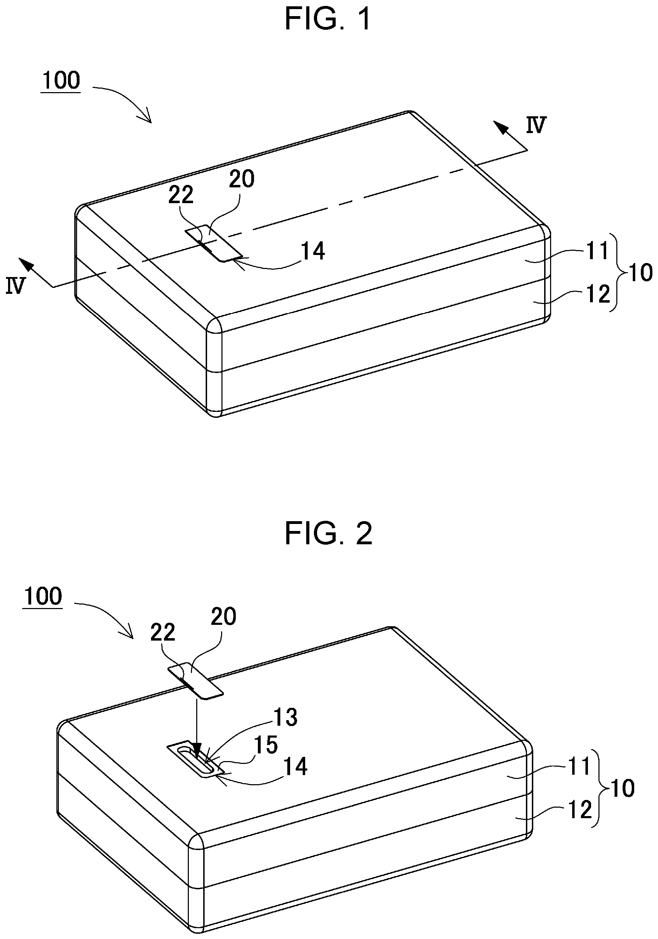

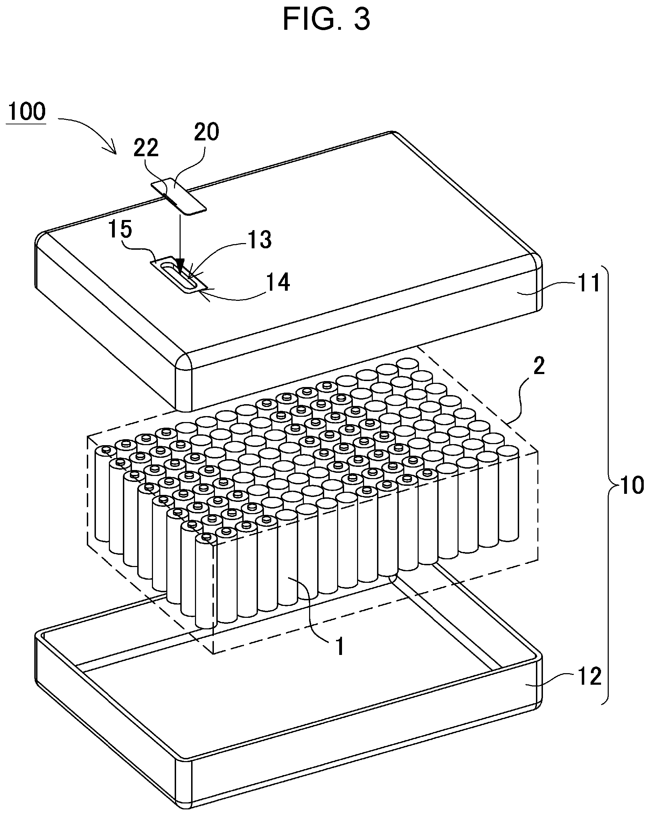

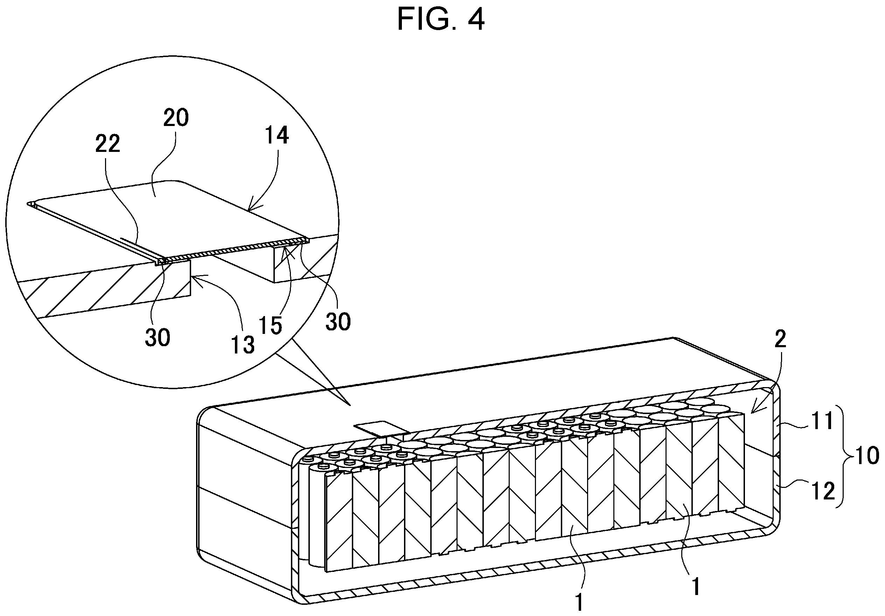

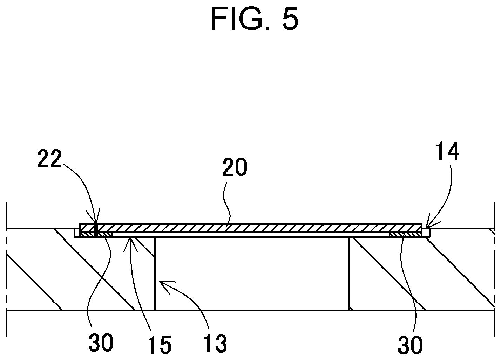

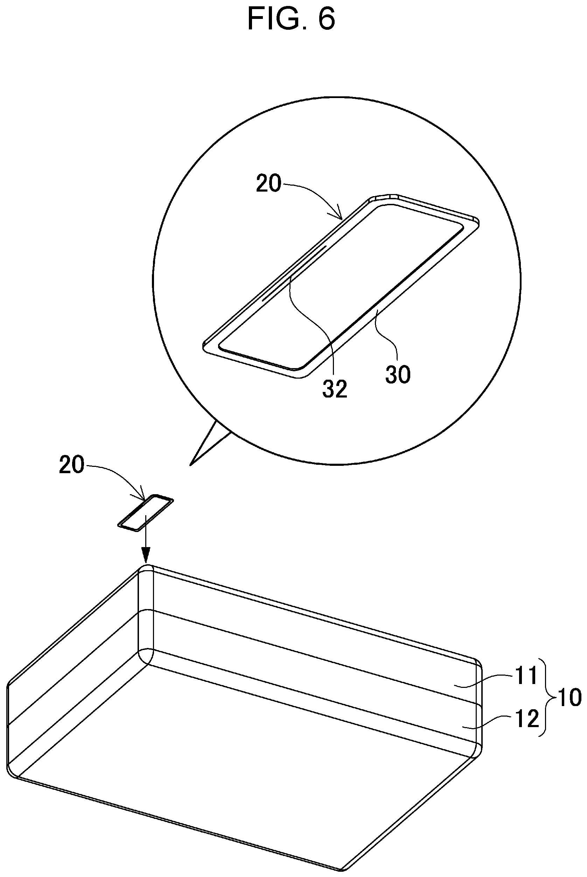

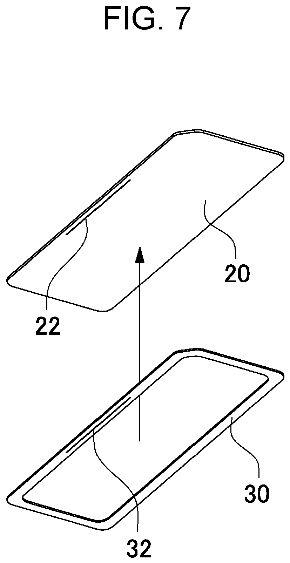

FIG. 1 to FIG. 7 each illustrate battery pack 100 according to Embodiment 1 of the present invention. Specifically, FIG. 1 is a perspective view of battery pack 100 according to Embodiment 1, FIG. 2 is an exploded perspective view of a front face of battery pack 100 illustrated in FIG. 1, FIG. 3 is an exploded perspective view of an inside of battery pack 100 illustrated in FIG. 1, FIG. 4 is a cross-sectional perspective view taken along line IV-IV in FIG. 1, FIG. 5 is an enlarged cross-sectional view of a main portion of FIG. 4, FIG. 6 is an enlarged exploded perspective view of FIG. 2 viewed from obliquely downward, and FIG. 7 is an exploded perspective view of label 20 in FIG. 6. Battery pack 100 illustrated in these figures includes outer covering case 10, label 20, and one or more secondary battery cells 1.

### (Outer Covering Case 10)

Outer covering case 10 houses one or more secondary battery cells 1 and battery holder 2. Outer covering case 10 is box shaped in appearance, as illustrated in FIG. 1, FIG. 2, and the like. Outer covering case 10 is divided into two cases, e.g., upper case 11 and lower case 12. Outer covering case 10 is preferably made of a resin with excellent insulation properties, such as polycarbonate or PC-ABS alloy, but may also be made of a metal member such as aluminum or alloy thereof. As illustrated in FIG. 2, a holder housing space for housing battery holder 2 is provided in outer covering case 10.

### (Secondary Battery Cell 1)

Each of one or more secondary battery cells 1 may be a secondary battery cell with a prismatic or cylindrical outer covering can. **In** the example illustrated in FIG. 3 and FIG. 4, 120 cylindrical secondary battery cells 1 are arranged in a vertical position. Ten secondary battery cells 1 are connected in series and twelve secondary battery cells are connected in parallel. The number and arrangement of the secondary battery cells and the number of series and parallel connections are not limited to this example, and any number and arrangement can be adopted as appropriate. Each secondary battery cell 1 includes positive and negative electrodes. The positive and negative electrodes are preferably provided on different end faces of secondary battery cell 1. Known secondary batteries, such as lithium-ion secondary batteries, nickel metal hydride batteries, nickel cadmium batteries, or the like, can be appropriately used for secondary battery cells 1.

The outer covering can of secondary battery cell 1 includes a safety valve. The safety valve opens in response to an increase in the internal pressure of the outer covering can to release the gas inside the outer covering can to the outside.

### (Exhaust Hole 13)

As illustrated in FIG. 2, FIG. 4, and FIG. 5, outer covering case 10 includes a portion in which exhaust hole 13 is provided to release high-pressure gas to the outside when the safety valve of secondary battery cell 1 is opened and the high-pressure gas is exhausted. Here, exhaust hole 13 is provided in label attachment region 14 to which label 20 is attached. Label 20 is attached to label attachment region 14 to close exhaust hole 13. Exhaust hole 13 is shifted in position to one side on the upper surface of outer covering case 10. The position of exhaust hole 13 is not limited to the upper surface of the outer covering case, but may also be provided on the side or bottom surface of the outer covering case. A plurality exhaust holes 13 may be provided at a plurality of positions. Exhaust hole 13 is designed according to the volume of outer covering case 10, the battery capacity of secondary battery cell 1, and the like, and is, for example, 12 mm in width.

### (Label 20)

Label 20 is adhered to the peripheral edge of exhaust hole 13 of outer covering case 10 and attached to label attachment region 14 of outer covering case 10. Label attachment region 14 is disposed on recessed portion 15 that is recessed compared with the other regions of outer covering case 10 so that label attachment region 14 is almost flush with the surface of label 20. Information on the specifications of battery pack 100, such as model number, manufacturer name, battery capacity, and rating, is pre-printed on Label 20. Label 20 is made of resin, such as polycarbonate or polypropylene, or is a paper based material impregnated or coated with resin. The outer shape of label 20 is rectangle. In the example in FIG. 2 and the like, the shape of label 20 is a horizontal rectangle with corners rounded, but the shape can be a vertical rectangle, a square, or a polygonal shape such as an octagonal shape.

### (Double-Sided Tape 30)

In order to attach label 20, the back side of label 20 at least partially includes an adhesive surface. Preferably, as illustrated in FIG. 6 and FIG. 7, double-sided tape 30 is attached around label 20 to attach an adhesive surface to label 20. Double-sided tape 30 is a member for fixing label 20 at position at which exhaust hole 13 is closed. For example, the thickness of label 20 is 0.5 mm, and the thickness of double-sided tape 30 is 0.2 mm. An adhesive agent or the like may be used to adhere label 20, in place of double-sided tape 30.

### (Rupture Origin Part 22)

Label 20 also includes rupture origin part 22 on a portion of its adhesive surface that is adhered to outer covering case 10. By providing rupture origin part 22 in a portion of label 20, even if high-pressure gas is released from the safety valve of secondary battery cell 1 into outer covering case 10, label 20 can be ruptured from the portion where the strength is intentionally decreased by rupture origin part 22 to accurately control the exhaust position of the high-pressure gas. This leads to an increased safety. This will be described with reference to battery pack 800 according to a comparative example illustrated in FIG. 8A and FIG. 8B. Battery pack 800 illustrated in FIG. 8A and FIG. 8B illustrates a state in which exhaust hole 813 of outer covering case 810 is closed with label 820. When the safety valve of a secondary battery cell is opened inside battery pack 800 and the internal pressure of the case increases as illustrated in FIG. 8A, the pressure ruptures label 820 as illustrated in FIG. 8B, so that high-pressure gas is exhausted to the outside the case through exhaust hole 813. However, this configuration has such a problem that it is difficult to balance the adhesive strength of label 820 and the exhaust pressure. In addition, variations in adhesive strength makes it difficult to control the exhaust direction.

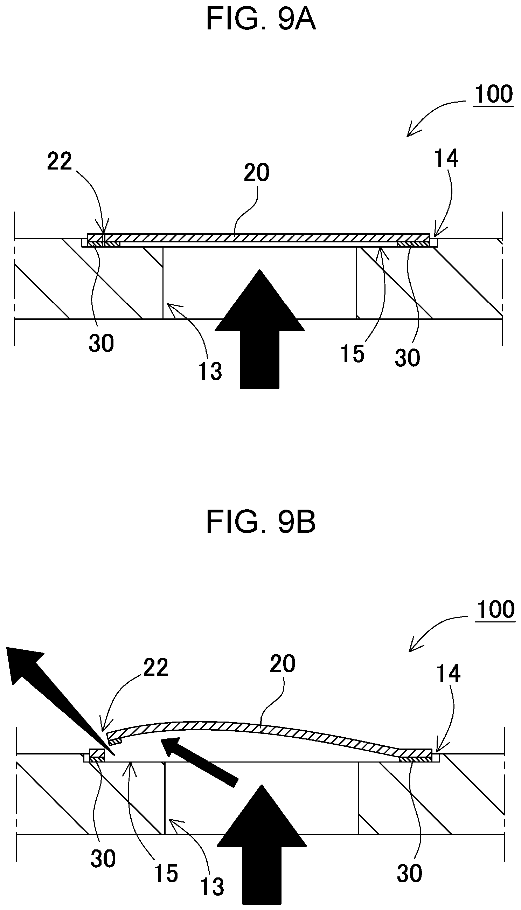

In contrast, in battery pack 100 according to the present embodiment, as illustrated in FIG. 9A and FIG. 9B, label 20 includes a configuration that intentionally ruptures, allowing exhaust to be performed regardless of the adhesive strength of label 20. In other words, since exhaust can be performed from the portion where rupture origin part 22 is provided, it is also easy to control the exhaust direction of the high-pressure gas.

For example, in an electrical device, such as an electric cart, which a user directly touches and uses, it is necessary to protect the human body from high-temperature and high-pressure gas in the event that such gas is released to the outside. In view of the above, safety measures can be taken easily by allowing, in advance, the gas exhaust position to be controlled as in battery pack 100 according to the present embodiment. For example, in electric scooters, a battery pack is generally housed inside the seat portion on which the user sits. For this, safety measures can be taken by providing, at the gas release position, a protective wall that prevents the high-pressure gas from coming into direct contact with the user. In this case, it is not necessary to cover the entire surface of the battery pack with a protective wall, but it is sufficient to partially provide a protective wall around the portion of the exhaust hole where the gas is exhausted. In addition, by allowing the exhaust direction of the gas to be easily controlled, safety measures and increased safety can be further achieved.

Rupture origin part 22 is preferably provided to be included in the region of label 20 to which double-sided tape 30 is attached, as illustrated in FIG. 4 and FIG. 5. With this, exhaust hole 13 is sealed with double-sided tape 30 to facilitate watertightness and airtightness, and rupture origin part 22 is provided in the region in which double-sided tape 30 is attached. Accordingly, it is possible to maintain watertightness and airtightness while providing rupture origin part 22.

Double-sided tape 30 preferably includes tape-side rupture part 32 at a position corresponding to rupture origin part 22 of label 20, as illustrated in FIG. 6 and FIG. 7. This facilitates control of the rupture origin position including double-sided tape 30. Preferably, a Thomson blade is used to form rupture origin part 22 while double-sided tape 30 is attached to label 20.

Rupture origin part 22 is preferably slit-shaped. This makes it possible to easily provide slit-shaped rupture origin part 22 on label 20 or double-sided tape 30 and add an easy-to-rupture origin point at an arbitrary position. The slit may be straight or may include a curve. Rupture origin part 22 is not limited to a slit, but can also be dots. In addition, a plurality of rupture origin parts 22 may be provided. For example, a large number of dots may be provided as a rupture origin part. Moreover, rupture origin parts may be provided at different positions on the label.

Label attachment region 14 on the peripheral edge of exhaust hole 13 of outer covering case 10, to which label 20 is attached, includes a portion in which a narrow portion with an adhesive width narrower than the other portions is provided. The narrow portion includes recessed portion 15 with a different adhesive width from the peripheral edge of exhaust hole 13. Rupture origin part 22 is preferably provided based on the portion of label 20 where the stress is increased by recessed portion 15 and by the high-pressure gas exhausted by the opening of the safety valve of secondary battery cell 1.

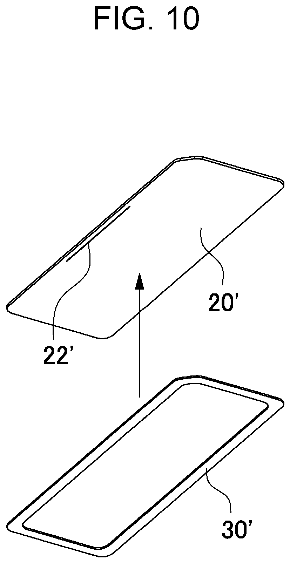

Rupture origin part 22 does not have to penetrate label 20, but may be provided only on the surface of label 20 without penetrating label 20, such as in a state so-called half-cut. Moreover, depending on the material and strength of double-sided tape 30, as long as the material and strength of tape-side rupture part 32 of double-sided tape 30 is at a level that does not affect the rupture origin point, as in label 20' illustrated in the variation in FIG. 10, only rupture origin part 22' may be provided and no tape-side rupture part may be provided on double-sided tape 30'.

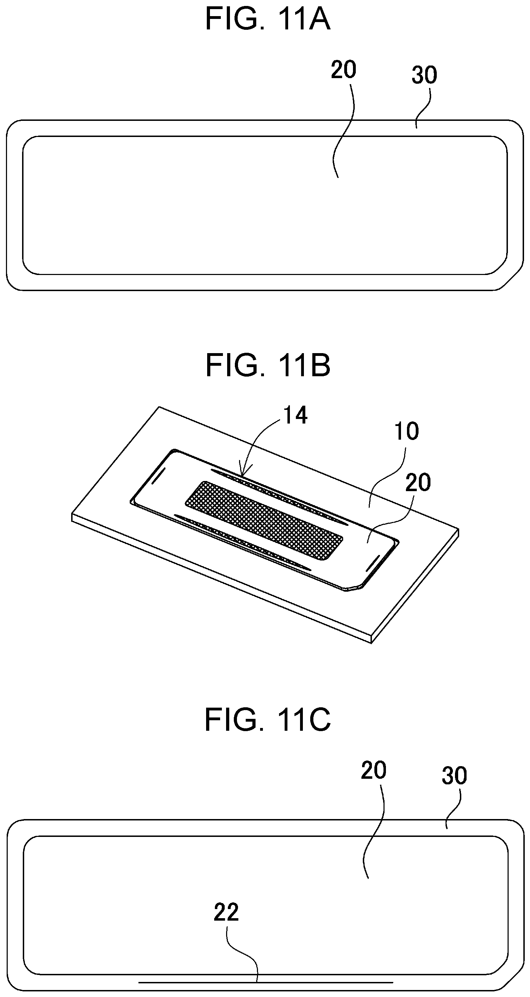

The position of rupture origin part 22 is preferably designed according to the shape of the region to which label 20 is adhered. In other words, by providing rupture origin part 22 within the adhesive surface of label 20, at a portion where stress is easily concentrated, a decision position can be controlled more accurately. For example, in an example where double-sided tape 30 is used to adhere label 20, the stress generated in the exhaust hole closed by label 20 is analyzed by CAE simulations according to the pattern of double-sided tape 30, and the position and size of rupture origin part 22 can be designed according to the analysis result. FIG. 11A, FIG. 11B, and FIG. 11C respectively illustrate a pattern of double-sided tape 30 of battery pack 100 according to Embodiment 1 described above, a result of stress analysis by CAE, and the shape of the slit. In order to facilitate visualization, the pattern in a top view of battery pack 100 is illustrated here. In other words, the pattern of double-sided tape 30 provided on the back side of label 20 viewed from the front surface side is illustrated. As illustrated in FIG. 11A, when double-sided tape 30 has an equal width around label 20, since stress is concentrated in the central portion in the lengthwise direction as illustrated in FIG. 11B, rupture origin part 22 is preferably provided on one of the lengthwise sides of label 20, as illustrated in FIG. 11C.

### [Embodiments 2 to 5]

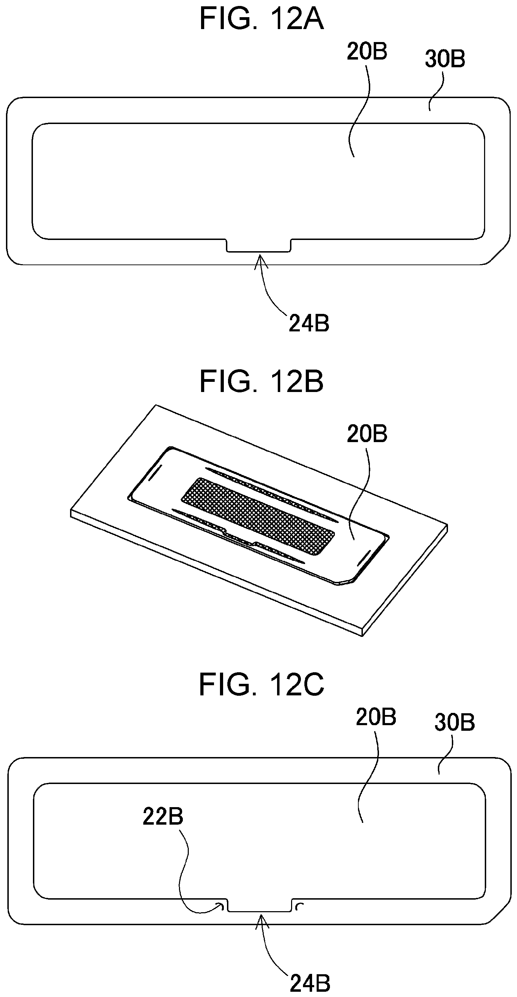

FIG. 12A to FIG. 15C illustrate examples of battery packs according to Embodiments 2 to 5 in which stress analyses by CAE were carried out according to different patterns of double-sided tapes and rupture origin parts were designed based on the analyses. As illustrated in FIG. 12B, FIG. 13B, FIG. 14B, and FIG. 15B, the CAE stress analysis results show that in the rectangular-shaped exhaust hole, label 20 is deformed by the high pressure in battery pack 100, resulting in the largest deformation and high stress in the central portion in the lengthwise direction. In contrast, it is shown that the corners of label 20 are less influenced by the pressure as the distance is longer.

For example, in a battery pack according to Embodiment 2, as illustrated in FIG. 12A, the central portion along one lengthwise of double-sided tape 30B is partially narrow. According to the result of stress analysis, as illustrated in FIG. 12B, the stress is locally high in the corners of the narrow region. Therefore, the slits of rupture origin parts 22B of label 20B are provided adjacent to irregular shaped portion 24B which is narrow in the central portion along the lengthwise side, as illustrated in FIG. 12C.

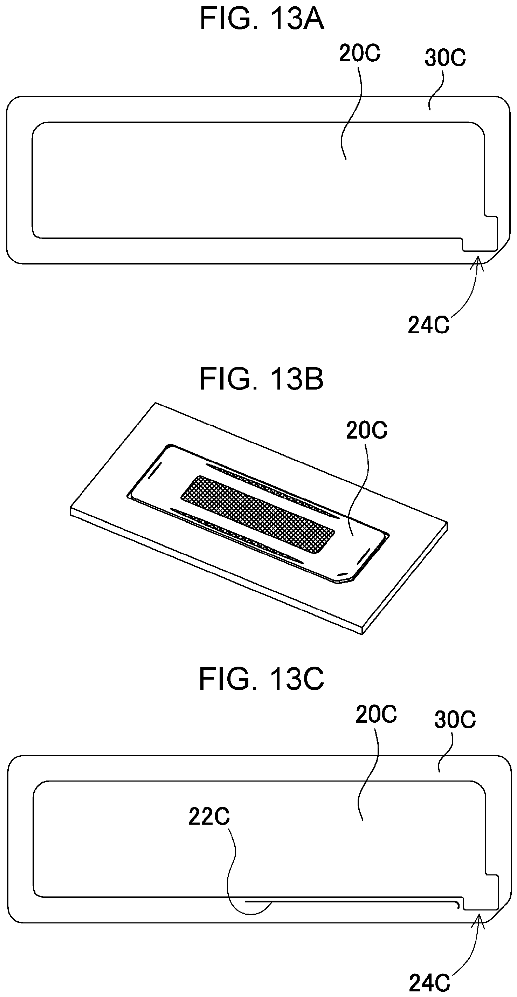

Moreover, in a battery pack according to Embodiment 3, as illustrated in FIG. 13A, one of the corners of double-sided tape 30C is irregular shaped portion 24C that is partially narrow in the corner. According to the stress analysis result, the stress increases along the lengthwise side toward irregular shaped portion 24C which is narrow, as illustrated in FIG. 13B. Therefore, as illustrated in FIG. 13C, the slit of rupture origin part 22C of label 20C extends from the central portion of one lengthwise side to irregular shaped portion 24C in the corner and is further curved immediately before irregular shaped portion 24C.

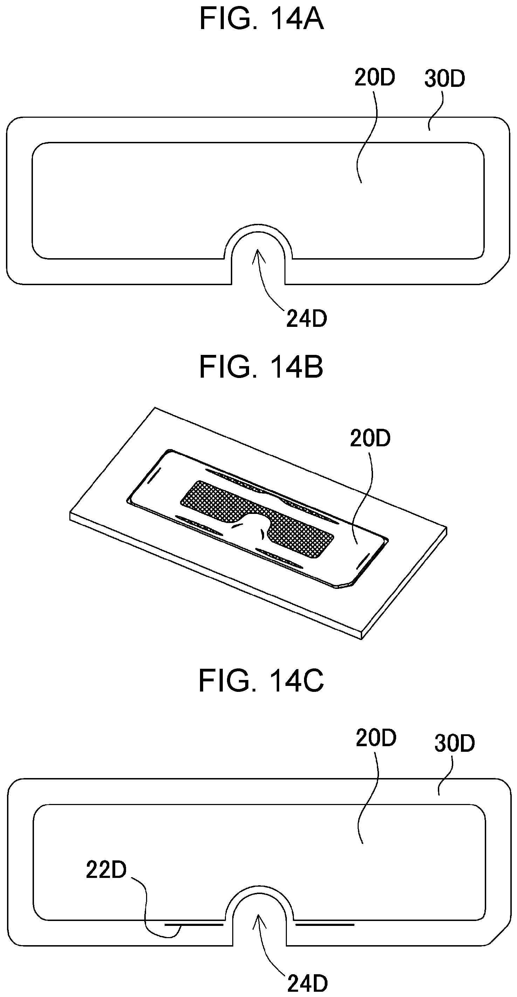

Moreover, in a battery pack according to Embodiment 4, as illustrated in FIG. 14A, irregular shaped portion 24D that is recessed in a U-shape toward inside is provided in the central portion along one lengthwise side of double-sided tape 30D. The width of double-sided tape 30D at irregular shaped portion 24D is narrow. Such a shape can be adopted when the shape of exhaust hole 13 is partially recessed due to the restrictions of outer covering case 10. According to the stress analysis result, as illustrated in FIG. 14B, the stress is higher on both sides of U-shaped irregular shaped portion 24D on the lengthwise side. Therefore, the slits of rupture origin parts 22D on label 20D extend at both sides of U-shaped irregular shaped portion 24D in the central portion of the lengthwise side, as illustrated in FIG. 14C.

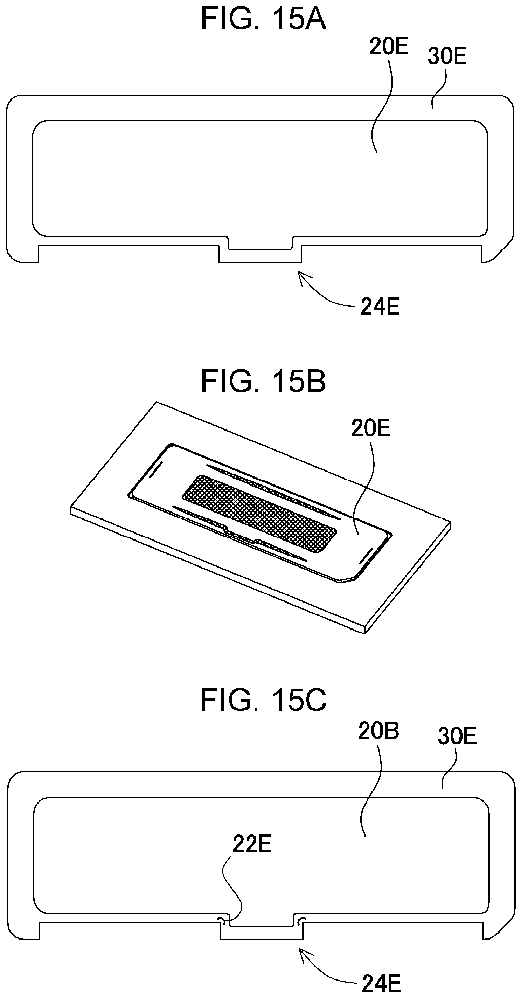

Moreover, in a battery pack according to Embodiment 5, as illustrated in FIG. 15A, irregular shaped portion 24E that is indented from the inside as illustrated in FIG. 12A is provided in the central portion along one lengthwise side of double sided tape 30E, reducing the width of double-sided tape 30E. In contrast, at both sides of irregular shaped portion 24E, double-sided tape 30E is indented from the outside, reducing the width of double-sided tape 30E. As a result, the entire lower side of ring-shaped double-sided tape 30E is narrower than the other portions. According to the stress analysis result, stress is higher at irregular shaped portion 24E in the central portion along the lengthwise side as illustrated in FIG. 15B. Therefore, the slits of rupture origin parts 22E on label 20E are curved at irregular shaped portion 24E at the boundaries between the central idented portion and the indented portions at both sides of the central indented portion along the lengthwise side, as illustrated in FIG. 15C.

In the above examples, the battery pack is mounted on the electrical device to be driven to supply power to the electrical device. In addition, when the remaining capacity of the battery pack becomes low or the battery pack deteriorates over time, the battery pack can be replaced and the electrical device can continuously be used. The present invention is not limited to replaceable battery packs that mainly house secondary battery cells, but can also be applied to a form in which secondary battery cells are housed in the housing of the electrical device. In the present disclosure, a battery pack can be any one in which secondary battery cells are housed in a case, and an electrical device that includes a housing in which secondary battery cells for driving are housed is also referred to as a battery pack. In other words, the present invention is not limited to replaceable battery packs, but can also be applied to electrical devices that include secondary battery cells.

### INDUSTRIAL APPLICABILITY

The battery packs according to the present invention can be suitably used as power sources for wireless devices, and power sources for portable electrical devices such as electric cleaners and power tools. The battery packs can also be used as appropriate for applications such as power supply devices for mobile bodies such as assisted bicycles and electric carts.

### REFERENCE MARKS IN THE DRAWINGS

100 battery pack
1 secondary battery cell
2 battery holder
10 outer covering case
11 upper case
12 lower case
13 exhaust hole
14 label attachment region
15 recessed portion
20, 20', 20B, 20C, 20D, 20E label
22, 22', 22B, 22C, 22D, 22E rupture origin part
24B, 24C, 24D, 24E irregular shaped portion
30, 30', 30B, 30C, 30D, 30E double-sided tape
32 tape-side rupture part
800 battery pack
810 outer covering case
813 exhaust hole
820 label

## Claims

1. A battery pack comprising:
one or more secondary battery cells each of which includes an outer covering can with a safety valve;
an outer covering case that houses the one or more secondary battery cells and includes an exhaust hole for exhausting high-pressure gas to outside the outer covering case when the safety valve of at least one of the one or more secondary battery cells is opened to exhaust the high-pressure gas; and
a label that is adhered to a peripheral edge of the exhaust hole of the outer covering case to close the exhaust hole,
wherein the label includes an adhesive surface that is adhered to the outer covering case, the adhesive surface includes a rupture origin part.

2. The battery pack according to claim 1, further comprising:
a double-sided tape for adhering the label to the outer covering case to fix the label at a position at which the exhaust hole is closed,
wherein the rupture origin part is included in a region of the label to which the double-sided tape is attached.

3. The battery pack according to claim 2,
wherein the double-sided tape includes a tape-side rupture part at a position corresponding to the rupture origin part of the label.

4. The battery pack according to any one of claims 1 to 3,
wherein the rupture origin part is slit-shaped.

5. The battery pack according to any one of claims 1 to 3,
wherein the rupture origin part comprises a plurality of rupture origin parts that are provided at a plurality of positions of the label.

6. The battery pack according to any one of claims 1 to 3, comprising:
a label attachment region along the peripheral edge of the exhaust hole of the outer covering case, the label attachment region being a region to which the label is attached, the label attachment region including a portion in which a narrow portion with an adhesive width that is narrower than other portions of the label attachment region is provided,
wherein the narrow portion includes an irregular shaped portion that has a different adhesive width from the peripheral edge of the exhaust hole, and
the rupture origin part is provided on the label, at a position adjacent to the irregular shaped portion.
